# EUROPEAN PATENT SPECIFICATION

(11) **EP 2 790 520 B1**
(45) Date of publication and mention of the grant of the patent: **21.10.2015**
(21) Application number: 12809177.4
(22) Date of filing: 12.12.2012
(51) Int. Cl.: A23C 9/152, A23C 9/154, A23J 3/10, A23L 1/0562, A23L 1/187

(54) **DAIRY DESSERT COMPOSITION**
MILCHDESSERTZUSAMMENSETZUNG
COMPOSITION DE DESSERT LAITIER

(30) Priority: 14.12.2011 EP 11193606
(43) Date of publication of application: 22.10.2014
(73) Proprietor: Nestec S.A., 1800 Vevey (CH)
(72) Inventor: CARLIER, Nicolas, F-14000 CAEN (FR); MANCHO, José, F-27230 Thiberville (FR); SERRE, Jean-Emmanuel, F-14100 Le Mesnil-Eudes (FR)
(74) Representative: Cogniat, Eric Jean Marie
(86) International application number: PCT/EP2012/075300
(87) International publication number: WO 2013/087730

(56) References cited:
- JP-A- 58 158 132
- US-A- 3 043 700
- US-A- 4 341 808
- US-A- 4 732 772
- DATABASE GNPD [Online] Mintel; 1 October 2011 (2011-10-01), Anonymous: "Double Layered Gâteau au Chocolat Dessert", XP002674813, retrieved from www.gnpd.com Database accession no. 1662108
- DATABASE GNPD [Online] Mintel; 1 November 2010 (2010-11-01), Anonymous: "Double Layer Melting Pudding with Soufflé", XP002674814, retrieved from www.gnpd.com Database accession no. 1443065
- DATABASE GNPD [Online] 1 November 2010 (2010-11-01), Anonymous: "Luxury Double Layer Cheese Pudding with Soufflé Topping", XP002674815, retrieved from www.gnpd.com Database accession no. 1443038
- DATABASE GNPD [Online] Mintel; 1 August 2010 (2010-08-01), Anonymous: "Cafe Twist Ice Cream", XP002674816, retrieved from www.gnpd.com accession no. 1516015
- Anonymous: "Hormel Solutions No Bake Egg Custard Mix", , 12 September 2009 (2009-09-12), pages 1-2, XP002674817, Retrieved from the Internet: URL:http://www.hormelhealthlabs.com/produc t_info.aspx?item_no=38995 [retrieved on 2012-04-26]
- Anonymous: "No Bake Custard Mix", , 2 January 2010 (2010-01-02), XP002674818, Retrieved from the Internet: URL:http://web.archive.org/web/20100102130 040/http://survivalacres.com/information/c ustard-info.htm [retrieved on 2012-04-26]
- RALPH EARLY: "The use of high-fat and specialized milk powders", INTERNATIONAL JOURNAL OF DAIRY TECHNOLOGY, vol. 43, no. 2, 1 May 1990 (1990-05-01), pages 53-56, XP055025504, ISSN: 1364-727X, DOI: 10.1111/j.1471-0307.1990.tb02425.x
- Anonymous: "No-Bake Lemon Souffle", , 27 May 2006 (2006-05-27), pages 1-2, XP002674819, Retrieved from the Internet: URL:http://greatrecipesdaily.blogspot.com/ 2006/05/no-bake-lemon-souffle.html [retrieved on 2012-04-26]

## Description

The invention relates to a non oven-cooked milk food composition containing eggs and caseinate and a process for obtaining it.

Oven-cooked milk food compositions containing eggs, such as, for instance egg entremets or milk desserts, which may be flavoured, are generally based on whole eggs and cream. Texturizing may be improved by adding thickening and /or gelling agents.

The egg content of the composition plays an important part in texture, while it necessarily implies cooking at high temperature, above 75°C, for at least 20 minutes in order to obtain the desired texture. From an economical viewpoint, oven-cooking involves a high consumption of energy and a subsequent significant cooling treatment if the container to be filled with the cooked milk food composition cannot stand high temperature, such as plastic containers. Such thermal treatment also involves using specific pieces of equipment and fulfilling hygiene requirements for this equipment.

Up to now, efforts have been made with respect to decreasing the egg content or increasing the content in texturizing agents, which does not avoid the oven-cooking step.

There is thus a need for a milk food composition containing eggs and a process for obtaining it, which allows obtaining the desired texture and organoleptic properties without oven-cooking.

It has now been found that including caseinate and a caseinate-crosslinking agent in the egg-containing milk composition allows avoiding the cooking step, while maintaining the texture usually obtained when using oven- cooking. Indeed, caseinate proteins used in specific mix composition were found to strongly interact between each other and with other protein elements, resulting in producing gellified products with high viscosity.

The invention thus relates to a non oven-cooked milk food composition containing eggs, wherein eggs can be in liquid form or else in the form of an egg powder, which comprises caseinate and a caseinate-crosslinking agent.

As used herein "caseinate" relates to a salt of casein protein with a base. Salts with alkali metals (such as, for example, sodium or potassium) or alkaline-earth metals (such as calcium) are suitable to the invention. "Casein protein" means all members of the milk fraction designated caseins, comprising alpha-, beta-, gamma- kappa- and lambda-caseins, and their mixtures, either synthetic or natural, in particular originating from milk cow. Sodium caseinate is preferred.

Caseinate is mainly used in the food industry as a stabilizer or emulsifier in foams and water-in-oil emulsions or as a source of milk protein.

A gelatin-free dairy dessert comprising sodium caseinate is disclosed in EP 1 513 410. EP 1 284 106 relates to an edible stable foam comprising crosslinked sodium caseinate. US 5 352 474 discloses a ready-to-use non dairy cream containing egg yolk, egg white and caseinate.

However, caseinate was not used hitherto as a texturizing agent in non-cooked milk compositions containing eggs.

"Caseinate-crosslinking agent" as used herein means a chemical compound which is able to produce crosslinked caseinate, such as, for example the alkaline-earth metal calcium. It can be used in the form of a salt of at least one organic acid, which can be used as food additive, such as, for example, gluconic acid or lactic acid, preferably in an aqueous solution. The caseinate-crosslinking agent according to the present invention is in the form of calcium lactate gluconate, preferably in aqueous solution. The amount of caseinate-crosslinking agent is preferably 0.1 to 4 wt%, preferably 0.2 to 2 wt%, even more preferably 0.4 to 1 wt%, in the form of a salt of at least one organic acid.

Unless otherwise stated, "wt%" is understood with respect to the total weight of ingredients.

Preferably, the composition according to the invention contains 1 to 5 wt%, preferably 1.5 to 4 wt%, more preferably 2 to 4 wt%, for instance 2,5 to 3,5 wt%, of caseinate. The caseinate is suitably in the form of a salt of casein protein with alkali metals or alkaline-earth metals. Advantageously, caseinate, preferably sodium caseinate, when used in presence of a caseinate-crosslinking agent, has the ability to create bonds between casein proteins as well as between other proteins, which results in developing a non oven-cooked dairy dessert having a texture which is similar to that of an oven-cooked product.

Eggs can be in liquid form, namely a mixture of egg white and egg yolk, or a whole egg in liquid form or a fresh egg, or in the form of an egg powder. Preferably, an egg powder comprising a dried pasteurized mixture of non-diluted whole egg and milk protein components will be used. A suitable egg powder is disclosed, for example, in EP 1 304 931.

The content of eggs in the composition can be, for example, of 1 to 10 wt%.

The composition according to the invention preferably comprises 50 to 80 wt% of a milk-based component.

By "milk-based component" is meant at least one component selected from whole milk, skimmed milk or partially skimmed milk, optionally reconstituted from milk powder, and cream.

The composition according to the invention may also contain usual ingredients of milk food composition containing eggs such as carbohydrates, in particular sucrose or fructose, vegetal ingredients, such as cocoa, dried or candied fruit pieces, citrus peels, nut pieces, natural or artificial colouring agents, natural or artificial flavouring agents etc.

The composition may also contain one or more food additives, such as thickening and/or gelling agents, such as, for example, galactomannans, carrageenans, xanthan gum, gelatin, starches and /or pectins.

Suitable food additives are disclosed, for example, in EP 2 010 007.

Preferably, the composition according to the invention is an egg based entremets or a small custard ramekin, whether flavoured or not. Preferably, the composition according to the invention is stored at refrigerated temperatures, such as between 2°C and 8°C. In particular, the composition according to the invention is not frozen. The composition according to the invention is ready-to-eat, without need of an oven-cooking step, neither during industrial production, nor by the consumer.

The invention also relates to a process for preparing a non-cooked milk food composition containing eggs, comprising: preparing a mixture comprising eggs, at least one milk-based component and caseinate, and adding a caseinate crosslinker,
wherein said milk-based component is at least one component selected from whole milk, skimmed milk or partially skimmed milk, optionally reconstituted from milk powder, and cream.

The caseinate and caseinate-crosslinking agent are as described above.

A sterilization step can be carried out prior to adding the caseinate-crosslinking agent.

The mixture comprising eggs, at least one milk-based component and caseinate may additionally contain usual ingredients of milk food composition containing eggs and at least one food additive as described earlier.

Advantageously, no pasteurization step is needed.

According to preferred embodiments, after sterilization, the mixture is cooled down to a temperature comprised between 80 to 95°C and the solution of caseinate-crosslinking agent is then added to the mixture. This preparation is then cooled down to a temperature comprised of 60 to 80°C and homogenized under a pressure of from 50 to 300 bar.

The mixture can then be stored before filling containers, which are sealed and cooled, prior to being stored at low temperature.

The composition according to the invention is ready-to-eat, without need of an oven-cooking step, neither during industrial production, nor by the consumer.

The invention is further illustrated with reference to the following non-limiting examples.

### Example 1: preparation of a small custard ramekin

The following ingredients were used

**Table 1**

| Ingrédients | wt% |
|---|---|
| Whole milk (3,61% FC) | 55.67 |
| Cream (40%FC) | 12.00 |
| Sodium caseinate | 3.00 |
| Egg powder | 2.50 |
| Sucrose | 8.00 |
| Low fat cocoa | 2.00 |
| Liquid chocolate | 10.00 |
| Gelifying agent (microcrystalline cellulose and carrageenans) | 1.00 |
| Calcium lactate gluconate solution | 5.83 |
| (calcium lactate gluconate | 0.50) |
| (water | 5.33) |
| TOTAL | 100.00 |

The following process was used:
All ingredients except the calcium lactate gluconate solution were mixed and submitted to sterilization at 129°C for at least 10 seconds.

After cooling to 85°C, the calcium lactate gluconate solution was added and the homogenized mixture was cooled to 78°C and then filled into the cup at a temperature between 55 and 75°C.

The gel strength of the composition was measured using the equipment TAXT + Texture Analyser at a speed of 0.5mm/sec, distance 5mm and the probe with a diameter of 25mm, and compared with commercial products obtained by a conventional process including an oven-cooking step

The results are shown in Table 2.

**Table 2**

| Chocolate based products | Gel strength (g) |
|---|---|
| Example 1 non oven-cooked milk product | 155 |
| Chocolate oven cooked cream private label (Commercial product 1) | 164 |
| Chocolate oven cooked cream (Commercial product 2) | 195 |

The results show that a texture which is comparable to that of commercial products can be obtained without performing an oven-cooking step. The texture of commercial product 1, in particular, is similar to that of the composition of example 1. The composition of example 1 is ready-to-eat, with no need of an oven-cooking step, either during industrial production, or by the consumer.

### Example 2: preparation of a small custard ramekin

The following ingredients were used

**Table 3**

| Ingredients | wt% |
|---|---|
| Half skimmed milk | 57.08 |
| Cream (30%FC) | 20.00 |
| Sodium caseinate | 2.50 |
| Egg powder | 2.00 |
| Sucrose | 11.00 |
| Vanilla flavour | 0.50 |
| Gelifying agent (microcrystalline cellulose, carrageenan) | 1.00 |
| Calcium lactate gluconate solution | 5.92 |
| (calcium lactate gluconate | 0.51) |
| (water | 5.41) |
| TOTAL | 100.00 |

The same process as in example 1 was used for preparing the composition. The composition of example 2 is ready-to-eat, with no need of an oven-cooking step, either during industrial production, or by the consumer.

## Claims

1. A non oven-cooked dairy dessert composition containing eggs, comprising caseinate and a caseinate-crosslinking agent, wherein the caseinate-crosslinking agent is calcium lactate gluconate.

2. A composition according to claim 1, wherein eggs can be in liquid form or in the form of an egg powder.

3. A composition according to claim 1 or 2, **characterized in that** the egg powder comprises a dried pasteurized mixture of non-diluted whole egg and milk protein components.

4. A composition according to any one of claims 1 to 3, **characterized in that** the caseinate is in the form of a salt of casein protein with alkali metals or alkaline-earth metals.

5. A composition according to any one of claims 1 to 4, **characterized in that** the caseinate is sodium caseinate.

6. A composition according to any one of claims 1 to 5, **characterized in that** it contains 1 to 5 wt% of caseinate.

7. A composition according to any one of claims 1 to 6, **characterized in that** it contains 0.1 to 4 wt% of caseinate-crosslinking agent in the form of calcium lactate gluconate.

8. A composition according to any one of claims 1 to 7, **characterized in that** it contains 50 to 80 wt% of a milk-based component, wherein said milk-based component is at least one component selected from whole milk, skimmed milk or partially skimmed milk, optionally reconstituted from milk powder, and cream.

9. A composition according to any one of claims 1 to 8, which is an egg based entremets or a small custard ramekin, whether flavoured or not.

10. A process for preparing a dairy dessert composition according to any one of claims 1 to 9, comprising
preparing a mixture comprising eggs, at least one milk-based component and caseinate, wherein said milk-based component is at least one component selected from whole milk, skimmed milk or partially skimmed milk, optionally reconstituted from milk powder, and cream, and
adding a caseinate crosslinker, which is calcium lactate gluconate.

11. The process according to claim 10, **characterized in that** a sterilization step is carried out prior to adding the caseinate-crosslinking agent.

12. The process according to claim 10 or 11, **characterized in that** the mixture comprising eggs, at least one milk-based component and caseinate contains 50 to 80 wt% of a milk-based component, and 1 to 5 wt% of caseinate.

13. The process according to any one of claims 10 to 12, **characterized in that** the caseinate crosslinker is added in an amount of 0.1 to 4 wt% in the form of calcium lactate gluconate.

14. The composition according to any one of claims 1 to 8, **characterized in that** it contains 1.5 to 4 wt% of caseinate and/or 0.4 to 1 wt% of caseinate-crosslinking agent in the form of calcium lactate gluconate.

## Patentansprüche

1. Zusammensetzung eines nicht im Ofen gebackenen, Eier enthaltenden Milchdesserts, mit Caseinat und einem Caseinat-Vernetzungsmittel, wobei das Caseinat-Vernetzungsmittel Calciumlactatgluconat ist.

2. Zusammensetzung nach Anspruch 1, wobei die Eier in flüssiger Form oder in Form eines Eipulvers vorhanden sein können.

3. Zusammensetzung nach Anspruch 1 oder 2, **dadurch gekennzeichnet, dass** das Eipulver eine getrocknete, pasteurisierte Mischung aus unverdünntem Vollei und Milchproteinkomponenten aufweist.

4. Zusammensetzung nach einem der Ansprüche 1 bis 3, **dadurch gekennzeichnet, dass** das Caseinat in Form eines Salzes von Casein-Protein mit Alkalimetallen oder Alkalierdmetallen vorhanden ist.

5. Zusammensetzung nach einem der Ansprüche 1 bis 4, **dadurch gekennzeichnet, dass** das Caseinat Natriumcaseinat ist.

6. Zusammensetzung nach einem der Ansprüche 1 bis 5, **dadurch gekennzeichnet, dass** sie 1 bis 5 Gew.-% Caseinat enthält.

7. Zusammensetzung nach einem der Ansprüche 1 bis 6, **dadurch gekennzeichnet, dass** sie 0,1 bis 4 Gew.-% Caseinat-Vernetzungsmittel in Form von Calciumlactatgluconat enthält.

8. Zusammensetzung nach einem der Ansprüche 1 bis 7, **dadurch gekennzeichnet, dass** sie 50 bis 80 Gew.-% einer milchbasierten Komponente enthält, wobei die milchbasierte Komponente mindestens eine Komponente ist, ausgewählt aus Vollmilch, Magermilch oder teilentrahmter Milch, wahlweise rekonstituiert aus Milchpulver, und aus Rahm.

9. Zusammensetzung nach einem der Ansprüche 1 bis 8, die ein auf Ei basierendes Zwischengericht oder ein kleiner Puddingauflauf, aromatisiert oder nicht, ist.

10. Verfahren zur Herstellung einer Milchdessertzusammensetzung nach einem der Ansprüche 1 bis 9, aufweisend
das Herstellen einer Mischung mit Eiern, mindestens einer milchbasierten Komponente und Caseinat, wobei die milchbasierte Komponente mindestens eine Komponente ist, ausgewählt aus Vollmilch, Magermilch oder teilentrahmter Milch, wahlweise rekonstituiert aus Milchpulver, und aus Rahm, und
das Zugeben eines Caseinat-Vernetzungsmittels, das Calciumlactatgluconat ist.

11. Verfahren nach Anspruch 10, **dadurch gekennzeichnet, dass** vor dem Zugeben des Caseinat-Vernetzungsmittels ein Sterilisationsschritt durchgeführt wird.

12. Verfahren nach Anspruch 10 oder 11, **dadurch gekennzeichnet, dass** die Mischung mit Eiern, mindestens einer milchbasierten Komponente und Caseinat 50 bis 80 Gew.-% einer milchbasierten Komponente und 1 bis 5 Gew.-% Caseinat enthält.

13. Verfahren nach einem der Ansprüche 10 bis 12, **dadurch gekennzeichnet, dass** das Caseinat-Vernetzungsmittel in einer Menge von 0,1 bis 4 Gew.-% in Form von Calciumlactatgluconat zugefügt wird.

14. Zusammensetzung nach einem der Ansprüche 1 bis 8, **dadurch gekennzeichnet, dass** sie 1,5 bis 4 Gew.-% Caseinat und/oder 0,4 bis 1 Gew.-% Caseinat-Vernetzungsmittel in Form von Calciumlactatgluconat enthält.

## Revendications

1. Composition de dessert laitier non cuit au four contenant des oeufs, comprenant du caséinate et un agent de réticulation de caséinate, dans laquelle l'agent de réticulation de caséinate est le gluconate de lactate de calcium.

2. Composition selon la revendication 1, dans laquelle les oeufs peuvent être sous forme liquide ou sous la forme d'une poudre d'oeuf.

3. Composition selon la revendication 1 ou 2, **caractérisée en ce que** la poudre d'oeuf comprend un mélange pasteurisé séché d'oeuf entier non dilué et de composants de protéine de lait.

4. Composition selon l'une quelconque des revendications 1 à 3, **caractérisée en ce que** le caséinate est sous la forme d'un sel de protéine de caséine avec des métaux alcalins ou des métaux alcalino-terreux.

5. Composition selon l'une quelconque des revendications 1 à 4, **caractérisée en ce que** le caséinate est le caséinate de sodium.

6. Composition selon l'une quelconque des revendications 1 à 5, **caractérisée en ce qu'**elle contient 1 à 5% en poids de caséinate.

7. Composition selon l'une quelconque des revendications 1 à 6, **caractérisée en ce qu'**elle contient 0,1 à 4% en poids d'agent de réticulation de caséinate sous la forme de gluconate de lactate de calcium.

8. Composition selon l'une quelconque des revendications 1 à 7, **caractérisée en ce qu'**elle contient 50 à 80 % en poids d'un composant à base de lait, dans laquelle ledit composant à base de lait est au moins un composant choisi parmi le lait entier, le lait écrémé ou le lait partiellement écrémé, facultativement reconstitué à partir de poudre de lait, et de crème.

9. Composition selon l'une quelconque des revendications 1 à 8, qui est un entremets à base d'oeuf ou un petit ramequin de crème, aromatisé ou non.

10. Procédé de préparation d'une composition de dessert laitier selon l'une quelconque des revendications 1 à 9, comprenant
la préparation d'un mélange comprenant des oeufs, au moins un composant à base de lait et du caséinate, dans lequel ledit composant à base de lait est au moins un composant choisi parmi lait entier, lait écrémé ou lait partiellement écrémé, reconstitué facultativement à partir de poudre de lait, et de crème, et
l'ajout d'un agent de réticulation de caséinate, qui est le gluconate lactate de calcium.

11. Procédé selon la revendication 10, **caractérisé en ce qu'**une étape de stérilisation est réalisée avant l'ajout de l'agent de réticulation de caséinate.

12. Procédé selon la revendication 10 ou 11, **caractérisé en ce que** le mélange comprenant des oeufs, au moins un composant à base de lait et du caséinate contient 50 à 80 % en poids d'un composant à base de lait, et 1 à 5 % en poids de caséinate.

13. Procédé selon l'une quelconque des revendications 10 à 12, **caractérisé en ce que** l'agent de réticulation de caséinate est ajouté dans une quantité de 0,1 à 4 % en poids sous la forme de gluconate lactate de calcium.

14. Composition selon l'une quelconque des revendications 1 à 8, **caractérisée en ce qu'**elle contient 1,5 à 4 % en poids de caséinate et/ou 0,4 à 1% en poids d'agent de réticulation de caséinate sous la forme de gluconate lactate de calcium.
